# EUROPEAN PATENT APPLICATION

(11) **EP 4 797 093 A1**
(43) Date of publication of application: **26.08.2026**
(21) Application number: 24878743.4
(22) Date of filing: 06.09.2024
(51) Int. Cl.: G06F 9/455

(54) **METHOD AND APPARATUS FOR MARKING DIRTY PAGE DURING LIVE MIGRATION OF VIRTUAL MACHINE, BACK-END DEVICE, AND CHIP**

(30) Priority: 19.10.2023 CN 202311358093
(71) Applicant: Beijing Jaguar Microsystems Co., Ltd., Beijing 100000 (CN)
(72) Inventor: LIU, Jingtao, Beijing 100000 (CN); WANG, Jiandong, Beijing 100000 (CN); CHEN, Anqing, Beijing 100000 (CN); MI, Yan, Beijing 100000 (CN)
(74) Representative: HGF
(86) International application number: PCT/CN2024/117430
(87) International publication number: WO 2025/082094

(57) **Abstract**

A method and apparatus for marking a dirty page during the live migration of a virtual machine, a back-end device, and a chip. The method comprises: receiving a current DMA write request of a target virtual function device, on the basis of the current DMA write request, determining whether to generate a current dirty page write request, if the generation of a current dirty page write request is determined, generating a corresponding current dirty page write request, if the previous dirty page write request of the target virtual function device has not been stored, storing the current dirty page write request, if the previous dirty page write request of the target virtual function device has been stored, determining, on the basis of a write address of the current dirty page write request and a write address of the previous dirty page write request, whether to merge the current dirty page write request and the previous dirty page write request, and if the merging of the current dirty page write request and the previous dirty page write request is determined, storing a merged dirty page write request, and if the merging of the current dirty page write request and the previous dirty page write request is not determined outputting the previous dirty page write request to a post-stage module, and storing the current dirty page write request.

## Description

### CROSS-REFERENCE TO RELATED APPLICATIONS

This application claims priority to Chinese Patent Application No. 202311358093.0, filed with the China National Intellectual Property Administration on October 19, 2023, and titled "METHOD AND APPARATUS FOR MARKING DIRTY PAGE DURING LIVE MIGRATION OF VIRTUAL MACHINE, BACK-END DEVICE, AND CHIP", the entire contents of which are incorporated herein by reference.

### TECHNICAL FIELD

The present application relates to the field of live migration technology, and more particularly, to a method and an apparatus for marking dirty page during live migration of virtual machine, a VIRTIO back-end device, a chip, an electronic device, and a computer-readable storage medium.

### BACKGROUND

Virtual machine live migration is a technology that migrates a running virtual machine from one physical host to another physical host, and the purpose thereof is to implement dynamic adjustment and load balancing of resources without interrupting the operation of the virtual machine. In live migration, the running virtual machine before migration is referred to as a source virtual machine, and the running virtual machine after migration is referred to as a destination virtual machine. The migration process involves copying the memory contents of the source virtual machine to the destination virtual machine. Because it is a "live" migration, that is, the source virtual machine does not shut down during the migration process, the following case may occur: just after a segment of memory of the source virtual machine is copied to the destination virtual machine, the source virtual machine rewrites this segment of memory, for example, in the case that a Virtual I/O (VIRTIO)-net device receives a network data packet. In this case, this segment of memory needs to be recorded and copied to the destination virtual machine. This segment of memory is referred to as "dirty" memory, and the action of recording this segment of memory is referred to as dirty marking. During dirty marking, the memory is marked and recorded in units of pages, and the recorded pages are referred to as dirty pages.

Virtual I/O (VIRTIO) is a virtualization technology that provides a standard interface for efficient device communication between a virtual machine and a host machine. VIRTIO defines a set of general device interface specifications, including device registers, commands, and data transmission. A VIRTIO device is a specific device implementation that conforms to the VIRTIO specification, and may be a network device (VIRTIO-net), a block device (VIRTIO-blk), or a graphics device (VIRTIO-gpu), etc, which communicates with a driving program in the virtual machine by implementing the interfaces defined in the VIRTIO specification. The live migration process of a virtual machine implemented based on a VIRTIO device mainly includes the following stages 1 to 3.

In Stage 1, the following steps are executed:
Step 1, start the dirty page recording function of the source virtual machine;
Step 2, mark all memory of the source virtual machine as dirty pages, and copy it to the destination virtual machine.

In Stage 2, the following steps are executed:
Step 3, the source virtual machine VIRTIO device repeatedly marks the memory as dirty according to the actual situation;
Step 4, the console software repeatedly copies the marked dirty memory of the source virtual machine to the destination virtual machine, and clears the dirty page flags at the same time;
Repeat Steps 3 and 4.

The number of dirty pages of the source virtual machine gradually converges after the above Stage 2, and remaining marked dirty memory is all copied to the destination virtual machine at last.

In Stage 3, the following steps are executed:
Step 5, stop the source virtual machine;
Step 6, start the destination virtual machine.

The memory dirty marking in Steps 3 and 4 of Stage 2 described above is a repetitive task that needs to be executed frequently, therefore requiring frequent PCIe write operations, resulting in poor performance.

### SUMMARY

According to various embodiments of the present application, A method and an apparatus for a chip, a computer-readable storage medium, and an electronic device are provided.

According to a first aspect of the present application, an apparatus for marking dirty page during live migration of virtual machine is provided, and the apparatus includes:
an input module, configured to receive a current direct memory access (DMA) write request sent by a target virtual function device, and output the current DMA write request to a dirty page recording module;
the dirty page recording module, configured to determine whether to generate a current dirty page write request or not according to the current DMA write request, and if yes, output the generated current dirty page write request to a dirty page merging module; and
the dirty page merging module, configured to: when a previous dirty page write request of the target virtual function device has not stored, store the current dirty page write request; when the previous dirty page write request of the target virtual function device has already been stored, determine whether to merge the current dirty page write request and the previous dirty page write request or not according to respective write addresses thereof; if yes, store the merged dirty page write request; if no, output the previous dirty page write request to a subsequent module, and store the current dirty page write request.

In some embodiments, the dirty page recording module includes a dirty page marking logic unit, a mapping table, and a configuration table.

The mapping table is configured to store a live migration identifier of the target virtual function device, wherein the live migration identifier indicates whether a virtual machine where the target virtual function device is located is undergoing live migration.

The configuration table is configured to store a preset memory address range and a preset memory address of the virtual machine where the target virtual function device is located.

The dirty page marking logic unit is configured to: determine whether the virtual machine where the target virtual function device is located is undergoing live migration or not according to the mapping table; and if yes, determine whether to generate a current dirty page write request or not according to the write address of the current DMA write request and the preset memory address range, and if yes, generate the current dirty page write request according to the preset memory address and the write address of the current DMA write request.

In some embodiments, the mapping table includes mapping units in one-to-one correspondence with a plurality of virtual function devices. Each mapping unit is configured to store a live migration identifier and index information of a corresponding virtual function device, and the live migration identifier indicates whether a virtual machine where the virtual function device is located is undergoing live migration.

The configuration table includes a plurality of configuration units, and each configuration unit is configured to store a preset memory address range and a preset memory address of a corresponding virtual machine.

The logic unit is configured to: obtain the live migration identifier and the index information of a corresponding target virtual function device according to the mapping table, and determine whether the virtual machine where the target virtual function device is located is undergoing live migration or not according to the live migration identifier; if yes, obtain a preset memory address range and a preset memory address stored in a configuration unit corresponding to the index information, and determine whether to generate a current dirty page write request or not according to the write address of the current DMA write request and the preset memory address range, and if yes, generate the current dirty page write request according to the preset memory address and the write address of the current DMA write request.

In some embodiments, each configuration unit is further configured to store multiple segments of preset memory address ranges and one preset memory address of one virtual machine.

In some embodiments, a number of the configuration units is less than a number of the mapping units.

In some embodiments, the current dirty page write request includes a device number of the target virtual function device, a write address, and a write length.

In some embodiments, the dirty page merging module includes a merging logic unit and a plurality of dirty page storage units.

Each dirty page storage unit is configured to store a dirty page write request of one virtual function device.

The merging logic unit is configured to: when a dirty page storage unit corresponding to the target virtual function device has not stored a previous dirty page write request, store the current dirty page write request; when the dirty page storage unit corresponding to the target virtual function device has stored a previous dirty page write request, determine whether to merge the current dirty page write request and the previous dirty page write request or not according to respective write addresses thereof; if yes, store the merged dirty page write request; and if no, output the previous dirty page write request to a subsequent module, and store the current dirty page write request.

In some embodiments, the merging logic unit is further configured to determine to merge the current dirty page write request and the previous dirty page write request when *add₁*/*m = add₂*/*m* is satisfied, or when *add₁*/*m = 1+add₂*/*m* is satisfied, or when *1+add₁*/*m = add₂*/*m* is satisfied.

Where *add₁* represents the write address of the current dirty page write request, *add₂* represents the write address of the previous dirty page write request, and *m* represents a preset data width value.

In some embodiments, the merging logic unit is further configured to:
when *add₁*/*m = add₂*/*m* is satisfied, set a write address of the merged dirty page write request to be a sum of the preset memory address and the write address of the previous dirty page write request, and a write length to be one unit;
when *add₁*/*m = 1+add₂*/*m* is satisfied, set a write address of the merged dirty page write request to be a sum of the preset memory address and the write address of the previous dirty page write request, and a write length to be two units; and
when *1+add₁*/*m = add₂*/*m* is satisfied, set a write address of the merged dirty page write request to be a sum of the preset memory address and the write address of the current dirty page write request, and a write length to be two units.

In some embodiments, the dirty page storage unit is further configured to store a timestamp of the dirty page write request.

The merging logic unit is further configured to determine whether the dirty page write request has timed out according to the timestamp of the dirty page write request and a preset time threshold, and if yes, output a timed-out dirty page write request to the subsequent module.

In some embodiments, the merging logic unit is further configured to determine whether a plurality of dirty page write requests have timed out according to a preset polling algorithm.

In some embodiments, a DMA write request path is further included.

The input module is further configured to output the current DMA write request to the DMA write request path.

The DMA write request path is configured to output the current DMA write request to the subsequent module.

In some embodiments, the apparatus further includes a scheduling module.

The dirty page merging module is further configured to output the dirty page write request to the subsequent module through the scheduling module.

The DMA write request path is further configured to output the DMA write request to the subsequent module through the scheduling module.

The scheduling module is configured to schedule the dirty page write request output by the dirty page merging module and the DMA write request output by the DMA write request path according to a preset scheduling algorithm, and output the dirty page write request or the DMA write request to the subsequent module according to a scheduling result.

According to a second aspect of the present application, a method for marking dirty page during live migration of virtual machine is provided, and the method includes:
receiving a current direct memory access (DMA) write request sent by a target virtual function device;
determining whether to generate a current dirty page write request or not according to the current DMA write request, and if yes, generating the current dirty page write request;
when a previous dirty page write request of the target virtual function device is not stored, storing the current dirty page write request; and
when a previous dirty page write request of the target virtual function device has already been stored, determining whether to merge the current dirty page write request and the previous dirty page write request or not according to respective write addresses thereof; if yes, storing a merged dirty page write request; if no, outputting the previous dirty page write request to a subsequent module, and storing the current dirty page write request.

In some embodiments, the method further includes: querying a mapping table, and determining whether a virtual machine where the target virtual function device is located is undergoing live migration or not according to a query result; and if yes, querying a configuration table to obtain a preset memory address range and a preset memory address of the virtual machine, and determining whether to generate a current dirty page write request or not according to the write address of the current DMA write request and the preset memory address range, and if yes, generating the current dirty page write request according to the preset memory address and the write address of the current DMA write request.

The mapping table stores a live migration identifier of the target virtual function device; the live migration identifier indicates whether the virtual machine where the target virtual function device is located is undergoing live migration; and the configuration table is configured to store the preset memory address range and the preset memory address of the virtual machine where the target virtual function device is located.

In some embodiments, the mapping table includes mapping units in one-to-one correspondence with a plurality of virtual function devices, and each mapping unit stores a live migration identifier and index information of a corresponding virtual function device, wherein the live migration identifier indicates whether a virtual machine where the virtual function device is located is undergoing live migration.

The configuration table includes a plurality of configuration units, and each configuration unit is configured to store a preset memory address range and a preset memory address of a corresponding virtual machine.

The method further includes: obtaining the live migration identifier and the index information of a corresponding target virtual function device according to the mapping table; determining whether the virtual machine where the target virtual function device is located is undergoing live migration or not according to the live migration identifier; if yes, obtaining a preset memory address range and a preset memory address stored in a configuration unit corresponding to the index information; and determining whether to generate a current dirty page write request or not according to the write address of the current DMA write request and the preset memory address range, and if yes, generating the current dirty page write request according to the preset memory address and the write address of the current DMA write request.

In some embodiments, each configuration unit is configured to store multiple segments of preset memory address ranges and one preset memory address of one virtual machine.

In some embodiments, a number of the configuration units is less than a number of the mapping units.

In some embodiments, the current dirty page write request includes a device number of the target virtual function device, a write address, and a write length.

In some embodiments, the method further includes: when a dirty page storage unit corresponding to the target virtual function device has not stored a previous dirty page write request, storing the current dirty page write request; and when the dirty page storage unit corresponding to the target virtual function device has stored a previous dirty page write request, determining whether to merge the current dirty page write request and the previous dirty page write request or not according to respective write addresses thereof; if yes, storing the merged dirty page write request; and if no, outputting the previous dirty page write request to a subsequent module, and storing the current dirty page write request.

In some embodiments, the method further includes determining to merge the current dirty page write request and the previous dirty page write request when *add₁*/*m = add₂*/*m* is satisfied, or when *add₁*/*m = 1+add₂*/*m* is satisfied, or when *1+add₁*/*m = add₂*/*m* is satisfied. Where *add₁* represents the write address of the current dirty page write request, *add₂* represents the write address of the previous dirty page write request, and *m* represents a preset data width value.

In some embodiments, the method further includes:
when *add₁*/*m = add₂*/*m* is satisfied, setting a write address of the merged dirty page write request to be a sum of the preset memory address and the write address of the previous dirty page write request, and a write length to be one unit;
when *add₁*/*m = 1+add₂*/*m* is satisfied, setting a write address of the merged dirty page write request to be a sum of the preset memory address and the write address of the previous dirty page write request, and a write length to be two units; and
when *1+add₁*/*m = add₂*/*m* is satisfied, setting a write address of the merged dirty page write request to be a sum of the preset memory address and the write address of the current dirty page write request, and a write length to be two units.

In some embodiments, the dirty page storage unit is further configured to store a timestamp of the dirty page write request.

The method further includes determining whether the dirty page write request has timed out according to the timestamp of the dirty page write request and a preset time threshold, and if yes, outputting a timed-out dirty page write request to the subsequent module.

In some embodiments, the method further includes determining whether a plurality of dirty page write requests have timed out according to a preset polling algorithm.

In some embodiments, the method further includes scheduling the dirty page write request and the DMA write request according to a preset scheduling algorithm, and outputting the dirty page write request or the DMA write request to the subsequent module according to a scheduling result.

According to a third aspect of the application, a VIRTIO back-end device is provided, including the apparatus for marking dirty page during live migration of virtual machine of the first aspect.

According to a fourth aspect of the application, a chip is provided, including the apparatus for marking dirty page during live migration of virtual machine of the first aspect.

According to a fifth aspect of the application, an electronic device is provided, including a processor, a memory, and a computer program stored on the memory and executable on the processor, wherein the processor, when executing the computer program, performs the method for marking dirty page during live migration of virtual machine of the second aspect.

According to a sixth aspect of the application, a computer-readable storage medium is provided. The computer-readable storage medium has a computer program stored thereon, and the computer program, when executed by a processor, performs the method for marking dirty page during live migration of virtual machine of the second aspect.

The details of one or more embodiments of the present application are set forth in the accompanying drawings and the description below. Other features, objectives, and advantages of the present application will become apparent from the description, the drawings, and the claims.

### BRIEF DESCRIPTION OF THE DRAWINGS

In order to more clearly illustrate the technical solutions in the embodiments of the present application or the previous art, the accompanying drawings required for describing the embodiments or the previous art will be briefly introduced below. Obviously, the drawings in the following description are merely some embodiments of the present application, and those of ordinary skill in the art may still derive other drawings from these accompanying drawings without creative efforts.
FIG. 1 is a view showing a structure of an apparatus for marking dirty page during live migration of virtual machine according to an embodiment of the present application.
FIG. 2 is a view showing a structure of the apparatus for marking dirty page during live migration of virtual machine according to another embodiment of the present application.
FIG. 3 is a view showing a structure of the apparatus for marking dirty page during live migration of virtual machine according to yet another embodiment of the present application.
FIG. 4 is a flowchart of a method for marking dirty page during live migration of virtual machine according to an embodiment of the present application.

### DETAILED DESCRIPTION OF THE EMBODIMENTS

The detailed description of the appended drawings is intended as a description of the current preferred embodiments of the present application, and is not intended to represent the only form in which the present application may be implemented. It may be understood that the same or equivalent functions may be achieved by different embodiments that are intended to be encompassed within the spirit and scope of the present application.

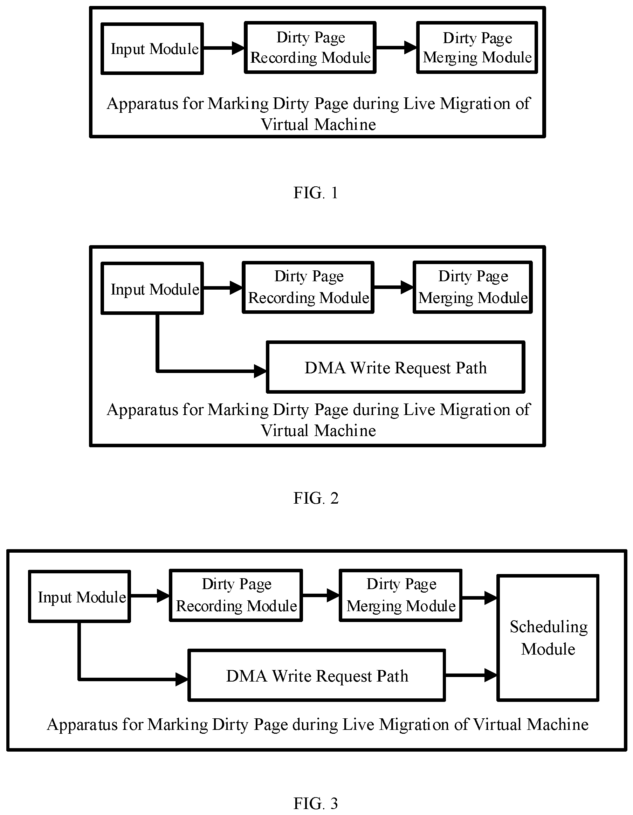

An embodiment of the present application provides an apparatus for marking dirty page during live migration of virtual machine. Referring to FIG. 1, the apparatus of this embodiment includes an input module, a dirty page recording module, a dirty page merging module, and a DMA write request path.

The input module is configured to receive a current DMA write request of a target virtual function device, and output the current DMA write request to the dirty page recording module. Specifically, a virtual machine includes a plurality of virtual function devices, for example, the virtual function device may be a network device (VIRTIO-net), or a block device (VIRTIO-blk), etc. The target virtual function device is one of the plurality of virtual function devices, which is, for contextual convenience, described as the target virtual function device herein. The DMA write request of the virtual function device refers to a request for a write operation to a host physical memory initiated by the virtual function device in the virtual machine, and the request for the write operation is implemented by a DMA processing module. Direct Memory Access (DMA) is a data transmission method that allows a device to directly access host memory without CPU intervention.

The dirty page recording module is configured to determine whether to generate a current dirty page write request or not according to the current DMA write request, and if yes, output the generated current dirty page write request to the dirty page merging module. Specifically, the current DMA write request includes a target Virtual Function device ID (VFid), a write address, and a write length. The corresponding target virtual machine can be determined according to the VFid, and then it is determined whether the target virtual machine is in a live migration process. Dirty page marking is only required during the live migration process of the virtual machine. Further, a corresponding write address can be determined according to the current DMA write request, and dirty page marking is only required when the write address falls within a corresponding memory address range. Based on the above two points, it can be determined whether it is necessary to generate a current dirty page write request according to the current DMA write request.

The dirty page merging module is configured to: when a previous dirty page write request of the target virtual function device has not stored, store the current dirty page write request; when a previous dirty page write request of the target virtual function device has already been stored, determine whether to merge the current dirty page write request and the previous dirty page write request or not according to respective write addresses thereof; if yes, store the merged dirty page write request; if no, output the previous dirty page write request to a subsequent module, and store the current dirty page write request. Specifically, a storage unit may be configured for storing the dirty page write request of the target virtual function device. If the current dirty page write request is received, and the storage unit has the previous dirty page write request of the target virtual function device stored thereon, it can be determined whether the two dirty page write requests can be merged according to the write addresses thereof. If they cannot be merged, the previous dirty page write request needs to be output to the subsequent module first, and then the current dirty page write request is stored in the storage unit for subsequent merging or output. If the storage unit has no previous dirty page write request of the target virtual function device stored thereon, the current dirty page write request is directly stored in the storage unit, for subsequent merging or output. Therefore, in this embodiment, upon receiving a dirty page write request, rather than being directly output, instead it is determined whether the dirty page write request can be merged.

Specifically, the subsequent module is typically a PCIe controller. Ultimately, both the current DMA write request and the dirty page write request need to be sent to the DMA processing module for processing. The DMA processing module is an important component in a computer system which is configured to implement high-speed data transmission. When a processor needs to write data from a peripheral to memory, the write request can be processed by the DMA processing module. When the DMA processing module processes a dirty page write request, it writes preset dirty page flag data to the corresponding memory address to determine which memories are "dirty" memories.

In summary, the method of this embodiment can make determinations based on the write addresses of different dirty page write requests, thereby merging multiple dirty page write requests into one dirty page write request, which can reduce the number of PCIe write operations. By reducing the number of PCIe write operations, the need for data transmission and storage can be reduced, thereby reducing system resource consumption. Moreover, the bandwidth of the PCIe bus is limited, therefore reducing the number of PCIe write operations can also improve the efficiency of data transmission and reduce transmission delay. In conclusion, the present application has advantages in reducing data transmission and storage requirements, lowering system resource consumption, and improving processing efficiency, thereby improving the performance of dirty page marking during live migration of the virtual machine.

In some embodiments, the dirty page recording module includes a dirty page marking logic unit, a mapping table, and a configuration table.

The mapping table is configured to store a live migration identifier of the target virtual function device, and the live migration identifier indicates whether the virtual machine where the target virtual function device is located is undergoing live migration. Specifically, the live migration identifier can be set such that when the live migration identifier is 1, it indicates that the virtual machine where the target virtual function device is located is undergoing live migration; when the live migration identifier is 0, it indicates that the virtual machine where the target virtual function device is located is not undergoing live migration. Therefore, the corresponding live migration identifier can be obtained by querying the mapping table according to the VFid, thereby determining whether the virtual machine where the target virtual function device is located is undergoing live migration.

The configuration table is configured to store a preset memory address range and a preset memory address of the virtual machine where the target virtual function device is located. Specifically, dirty page marking is determined to be necessary only when the write address of the current DMA write request falls within the preset memory address range. The preset memory address refers to a starting address used for writing the dirty page flag data.

The dirty page marking logic unit is configured to: determine whether the virtual machine where the target virtual function device is located is undergoing live migration or not according to the mapping table; if yes, determine whether to generate a current dirty page write request or not according to the write address of the current DMA write request and the preset memory address range, and if yes, generate the current dirty page write request according to the preset memory address and the write address of the current DMA write request.

Specifically, assuming the preset memory address is address *a*, a memory space is partitioned for dirty page marking by using address *a* as a starting address. Assuming this memory space includes *n* address units, one address unit corresponding to the write address of the current DMA write request can be determined, and then this address unit is marked. Each address unit may correspond to a write address range.

In some embodiments, the mapping table includes mapping units in one-to-one correspondence with a plurality of virtual function devices. Each mapping unit is configured to store a live migration identifier and index information (*idx* information) of a corresponding virtual function device. The live migration identifier indicates whether the virtual machine where the virtual function device is located is undergoing live migration. Specifically, the address or index in each mapping unit of the mapping table is the VFid of its corresponding virtual function device ID. Therefore, the corresponding mapping unit can be found based on the VFid, and further, the corresponding live migration identifier and *idx* information can be read out.

The configuration table includes a plurality of configuration units, and each configuration unit is configured to store a preset memory address range and a preset memory address of a corresponding virtual machine.

The logic unit is configured to obtain the live migration identifier and *idx* information of the corresponding target virtual function device according to the mapping table, and determine whether the virtual machine where the target virtual function device is located is undergoing live migration or not according to the live migration identifier; if yes, obtain the preset memory address range and the preset memory address stored in a configuration unit corresponding to the *idx* information, and determine whether to generate a current dirty page write request or not according to the write address of the current DMA write request and the preset memory address range, and if yes, generate the current dirty page write request according to the preset memory address and the write address of the current DMA write request.

Specifically, if the live migration identifier corresponding to the target virtual function device indicates that the virtual machine where the target virtual function device is located is undergoing live migration, the corresponding *idx* information of the target virtual function deviceis an index or a table address of a configuration unit. According to the *idx* information, a corresponding configuration unit can be found, and the corresponding preset memory address range and the preset memory address are read therefrom.

In some embodiments, each configuration unit is specifically configured to store multiple segments of preset memory address ranges and one preset memory address of one virtual machine.

Specifically, considering that during virtual machine live migration, not the entire memory of the virtual machine is rewritten, and there are cases where some memory needs not to be migrated to the destination virtual machine even if it is rewritten. Therefore, the memory range that needs to be marked as dirty pages can be further refined. Based on this, the method of this embodiment segments the virtual machine memory address that needs to be compared to obtain multiple segments of preset memory address ranges. During address comparison, the write address of the DMA write request is only compared with these segmented addresses. If the write address of the DMA write request falls into any one of the segments of the preset memory address ranges, a dirty page write request is generated, and if the write address of the DMA write request does not fall into any segment of the preset memory address range, no dirty page write request is generated, which brings the advantage that the recording space for dirty page records becomes smaller, and accordingly a search range for records also becomes smaller, thereby reducing the computational resource burden.

In some embodiments, the number of configuration units is less than the number of mapping units.

Specifically, in a system supporting virtualization functions, there may be hundreds to thousands of virtual function devices, and these virtual function devices are bound to different virtual machines. In one system, the number of virtual machines undergoing concurrent live migration is limited (on the order of tens), and it is impossible for all virtual function devices to undergo live migration simultaneously. Therefore, the method of this embodiment configures the mapping table and the configuration table. The mapping table has a relatively large depth (in the thousands), corresponding to the number of virtual function devices (which each virtual function device has an entry in the mapping table indexed by the VFid). The configuration table has a relatively small depth (in the tens), representing the number of simultaneous live migrations.

In this embodiment, when a virtual machine requires live migration, a management software first selects an unused configuration unit from the configuration table, and writes corresponding preset memory address ranges and one preset memory address into the configuration unit. Then, the management software writes the index (i.e., the VFid) of the selected configuration unit into a mapping unit corresponding to the current virtual machine as its *idx* information, where the mapping unit is indexed by the VFid.

In some embodiments, the current dirty page write request includes a device number of the target virtual function device, a write address, and a write length.

Specifically, conventional dirty page marking is generally performed with a 4KB page granularity. In this embodiment, dirty page marking can be performed with a granularity of 4KB, 8KB, 16KB, 32KB page, etc, and not limited to a 4KB page granularity. Taking 32KB as an example, the method of this embodiment can merge dirty page write requests for adjacent or overlapping 32KB memory address spaces.

It should be noted that the reason for introducing dirty page merging in the method of this embodiment is mainly considering the following situation. Program execution usually has spatial locality, and when a memory address in a virtual machine is updated, its adjacent memory addresses are usually updated as well. It would be somewhat wasteful to issue a dirty page record every time a memory address is updated. The dirty page write requests caused by multiple DMA write requests with identical or adjacent addresses can be merged into a single dirty page write request, thereby reducing the number of dirty page write requests and reducing the waste of PCIe write bandwidth. Therefore, in the method of this embodiment, when merging dirty page marking operations (dirty page write requests) for the two overlapping memory address spaces of unit granularity, the merged write length is one unit; and when merging dirty page marking operations (dirty page write requests) for two adjacent memory address spaces of unit granularity, the merged write length is two units.

In some embodiments, the dirty page merging module includes a merging logic unit and a plurality of dirty page storage units.

Each dirty page storage unit is configured to store a dirty page write request of one virtual function device.

The merging logic unit is configured to: when the dirty page storage unit corresponding to the target virtual function device has not stored a previous dirty page write request, store the current dirty page write request; when the dirty page storage unit corresponding to the target virtual function device has stored a previous dirty page write request, determine whether to merge the current dirty page write request and the previous dirty page write request or not according to respective write addresses thereof; if yes, store the merged dirty page write request; if no, output the previous dirty page write request to the subsequent module, and store the current dirty page write request to serve as a next previous dirty page write request, which is subsequently used to determine whether it needs to be merged with the next dirty page write request.

In some embodiments, the merging logic unit is specifically configured to determine to merge the current dirty page write request and the previous dirty page write request when *add₁*/*m = add₂*/*m* is satisfied, or when *add₁*/*m = 1+add₂*/*m* is satisfied, or when *1+add₁*/*m = add₂*/*m* is satisfied.

Where *add₁* represents the write address of the current dirty page write request, *add₂* represents the write address of the previous dirty page write request, and *m* represents a preset data width value, namely a dirty page marking granularity, for example, 32KB.

Specifically, *add₁*/*m = 1+add₂*/*m* indicates that the write address of the current dirty page write request coincides with the previous dirty page write request, and both *1+add₁*/*m = add₂*/*m* and *1+add₁*/*m = add₂*/*m* indicate that the write address of the current dirty page write request is adjacent to the write address of the previous dirty page write request.

In some embodiments, the merging logic unit is specifically configured to:
When *add₁*/*m = add₂*/*m* is satisfied, set the write address of the merged dirty page write request to be the sum of the preset memory address and the write address of the previous dirty page write request, and the write length to be one unit;
When *add₁*/*m = 1+add₂*/*m* is satisfied, set the write address of the merged dirty page write request to be the sum of the preset memory address and the write address of the previous dirty page write request, and the write length to be two units;
When *1+add₁*/*m = add₂*/*m* is satisfied, set the write address of the merged dirty page write request to be the sum of the preset memory address and the write address of the current dirty page write request, and the write length to be two units.

Specifically, assuming the dirty page marking granularity *m* is 32KB, marking is performed at a granularity of 8 times a base page size of 4KB. That is, one byte in the dirty page record represents 32KB. For a corresponding memory space of 32GB, the required dirty page record space is 32GB / 32KB = 1MB. In other words, a length of one unit corresponds to one byte.

When *add₁*/*m = add₂*/*m* is satisfied, 0xFF (the dirty page flag data) is written to the corresponding write address; when *add₁*/*m = 1+add₂*/*m* or *1+add₁*/*m = add₂*/*m* is satisfied, 0xFFFF is written to the corresponding write address, which indicates that the 64KB memory starting from the previous request address is all dirty, or indicates that the 64KB memory starting from the current request address is all dirty.

In some embodiments, the dirty page storage unit is further configured to store a timestamp *tscnt* of the dirty page write request.

The merging logic unit is further configured to determine whether the dirty page write request has timed out based on the timestamp *tscnt* of the dirty page write request and a preset time threshold, and if yes, output the timed-out dirty page write request to the subsequent module.

Specifically, the method of this embodiment sets a timeout mechanism to prevent a dirty page write request of a virtual function device from being unsent for a prolonged period due to merging.

In a specific example, the timestamp *tscnt* can refer to a submission time/generation time of the dirty page write request. Specifically, it is determined that a timeout has occurred if a time difference between the current time and the timestamp is greater than or equal to a preset time threshold; and it is determined that no timeout has occurred if the time difference is less than the preset time threshold.

In some embodiments, the merging logic unit is specifically configured to determine whether a plurality of dirty page write requests have timed out according to a preset polling algorithm.

In a specific example, each dirty page storage unit stores a *valid* signal. When the *valid* signal is 1, it indicates that the dirty page write request in the corresponding dirty page storage unit is valid; when the *valid* signal is 0, it indicates that the dirty page write request in the corresponding dirty page storage unit is invalid. By means of polling, it is used to query whether the dirty page write request in a dirty page storage unit with a *valid* signal of 1 has timed out. If it has timed out, the timed-out dirty page write request is sent out; if it has not timed out, then *tscnt=tscnt+1* is set, and the initial value of *tscnt* can be 0. If all dirty page write requests with *valid* signals of 1 have completed the current polling round, proceed to the next polling round.

In some embodiments, referring to FIG. 2, the apparatus further includes a DMA write request path.

The input module is further configured to output the current DMA write request to the DMA write request path.

The DMA write request path is configured to output the current DMA write request to the subsequent module.

Specifically, the subsequent module is typically a PCIe controller. Ultimately, both the current DMA write request and the dirty page write request need to be sent to the DMA processing module for processing. When the DMA processing module processes the current DMA write request, it writes the data to be written of the current DMA write request to the corresponding memory address.

In some embodiments, referring to FIG. 3, the apparatus further includes a scheduling module.

The dirty page merging module is specifically configured to output the dirty page write request to the subsequent module through the scheduling module.

The DMA write request path is specifically configured to output the DMA write request to the subsequent module through the scheduling module.

The scheduling module is configured to schedule the dirty page write request output by the dirty page merging module and the DMA write request output by the DMA write request path based on a preset scheduling algorithm, and output the dirty page write request or the DMA write request to the subsequent module according to the scheduling result.

Specifically, the scheduling algorithm is, for example, a Round Robin scheduling: tasks are sequentially allocated to the two outputs in a polling manner, each output receives one task in turn, and then it is the turn for the next output. This algorithm is simple and fair, but may not fully utilize the performance differences between the two outputs. For another example, a Weighted Round Robin scheduling: a weight is assigned to each output to decide the allocation of tasks according to weights, and the output with a higher weight obtains more tasks. The weights can be set according to the performance differences of the outputs, thereby fully utilizing the performance of the two outputs.

It should be noted that each module in the apparatus of the above embodiments may be a software module, a hardware module, or a module implemented by a combination of software and hardware.

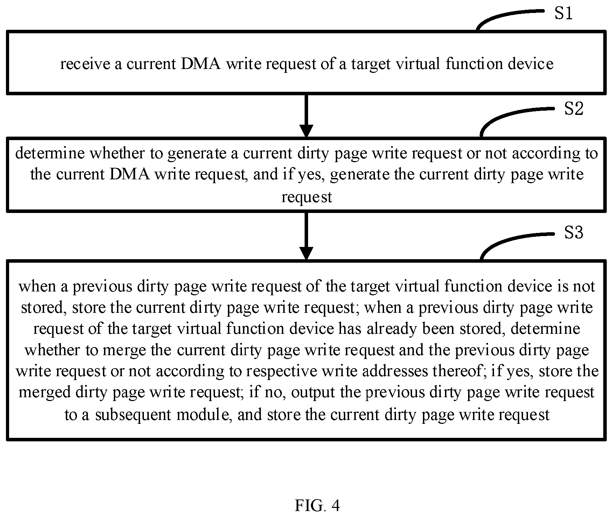

Another embodiment of the present application provides a method for marking dirty page during live migration of virtual machine. The method can be implemented based on the apparatus for marking dirty page during live migration of virtual machine of the above embodiments. Referring to FIG. 4, the method includes the following steps.

In Step S1, receive a current DMA write request of a target virtual function device.

In Step S2, determine whether to generate a current dirty page write request or not according to the current DMA write request, and if yes, generate the current dirty page write request.

In Step S3, when a previous dirty page write request of the target virtual function device has not stored, store the current dirty page write request; when a previous dirty page write request of the target virtual function device has already been stored, determine whether to merge the current dirty page write request and the previous dirty page write request or not according to respective write addresses thereof; if yes, store the merged dirty page write request; if no, output the previous dirty page write request to a subsequent module, and store the current dirty page write request.

In some embodiments, step S2 specifically includes:
querying a mapping table, and determining whether the virtual machine where the target virtual function device is located is undergoing live migration or not based on a query result; and if yes, querying a configuration table to obtain a preset memory address range and a preset memory address of the virtual machine; and determining whether to generate a current dirty page write request or not according to the write address of the current DMA write request and the preset memory address range, and if yes, generating the current dirty page write request according to the preset memory address and the write address of the current DMA write request.

The mapping table stores a live migration identifier of the target virtual function device, and the live migration identifier indicates whether the virtual machine where the target virtual function device is located is undergoing live migration. The configuration table is configured to store the preset memory address range and the preset memory address of the virtual machine where the target virtual function device is located.

In some embodiments, the mapping table includes mapping units in one-to-one correspondence with a plurality of virtual function devices. Each mapping unit is configured to store a live migration identifier and *idx* information of a corresponding virtual function device. The live migration identifier indicates whether the virtual machine where the virtual function device is located is undergoing live migration.

The configuration table includes a plurality of configuration units, and each configuration unit is configured to store a preset memory address range and a preset memory address of a corresponding virtual machine.

In some embodiments, step S2 specifically includes:
obtaining the live migration identifier and *idx* information of the corresponding target virtual function device according to the mapping table; determining whether the virtual machine where the target virtual function device is located is undergoing live migration or not according to the live migration identifier; if yes, obtaining the preset memory address range and the preset memory address stored in a configuration unit corresponding to the *idx* information; determining whether to generate a current dirty page write request or not according to the write address of the current DMA write request and the preset memory address range, and if yes, generating the current dirty page write request according to the preset memory address and the write address of the current DMA write request.

In some embodiments, each configuration unit is specifically configured to store multiple segments of preset memory address ranges and one preset memory address of one virtual machine.

In some embodiments, the number of configuration units is less than the number of mapping units.

In some embodiments, the current dirty page write request includes a device number of the target virtual function device, a write address, and a write length.

In some embodiments, step S3 specifically includes:
when the dirty page storage unit corresponding to the target virtual function device has not stored a previous dirty page write request, storing the current dirty page write request; when the dirty page storage unit corresponding to the target virtual function device has stored a previous dirty page write request, determining whether to merge the current dirty page write request and the previous dirty page write request or not according to respective write addresses thereof; if yes, storing the merged dirty page write request; if no, outputting the previous dirty page write request to the subsequent module, and storing the current dirty page write request.

In some embodiments, step S3 specifically includes:
determining to merge the current dirty page write request and the previous dirty page write request when *add₁*/*m = add₂*/*m* is satisfied, or when *add₁*/*m = 1+add₂*/*m* is satisfied, or when *1+add₁*/*m = add₂*/*m* is satisfied;
Where *add₁* represents the write address of the current dirty page write request, *add₂* represents the write address of the previous dirty page write request, and *m* is a preset data width value.

In some embodiments, step S3 specifically includes:
when *add₁*/*m = add₂*/*m* is satisfied, setting the write address of the merged dirty page write request to be the sum of the preset memory address and the write address of the previous dirty page write request, and the write length to be one unit;
when *add₁*/*m = 1+add₂*/*m* is satisfied, setting the write address of the merged dirty page write request to be the sum of the preset memory address and the write address of the previous dirty page write request, and the write length being two units;
when *1+add₁*/*m = add₂*/*m* is satisfied, setting the write address of the merged dirty page write request to be the sum of the preset memory address and the write address of the current dirty page write request, and the write length to be two units.

In some embodiments, the dirty page storage unit is further configured to store a timestamp *tscnt* of the dirty page write request.

In some embodiments, step S3 specifically includes: determining whether the dirty page write request has timed out based on the timestamp *tscnt* of the dirty page write request and a preset time threshold, and if yes, outputting the timed-out dirty page write request to the subsequent module.

In some embodiments, step S3 specifically includes determining whether a plurality of dirty page write requests have timed out according to a preset polling algorithm.

In some embodiments, the method further includes: Step S4, outputting the current DMA write request to the subsequent module.

In some embodiments, the method specifically further includes: scheduling the dirty page write request and the DMA write request based on a preset scheduling algorithm, and outputting the dirty page write request or the DMA write request to the subsequent module according to the scheduling result.

It should be noted that the methods for marking dirty page during live migration of virtual machine of these embodiments corresponds to the apparatus for marking dirty page during live migration of virtual machine of the above embodiments. Therefore, for parts not detailed in the methods for marking dirty page during live migration of virtual machine of these embodiments, reference may be made to the contents of the apparatus for marking dirty page during live migration of virtual machine of the above embodiments, which will not be repeatedly described herein.

Another embodiment of the present application provides a Virtual I/O (VIRTIO) back-end device, including the apparatus for marking dirty page during live migration of virtual machine of the above embodiments.

Specifically, VIRTIO is a general semi-virtualized I/O framework, through which the VMM simulates a series of virtualized devices. The VIRTIO framework mainly includes three parts: a Front-end Driver, a Back-end Device, and a virtual queue (Virtqueue). The Front-end Driver is a driver corresponding to a VIRTIO emulated device (such as a common VIRTIO network device, a VIRTIO disk device, etc.) inside the virtual machine. The Front-end Driver is configured to receive user-mode requests, then encapsulate these requests according to a protocol, and send them to the Back-end Device. The Back-end Device is usually implemented in a Quick Emulator (QEMU). The Back-end Device is configured to receive the I/O requests sent by the Front-end Driver, then parse the received data, complete receiving and sending requests on the actual physical device, and finally inform the Front-end Driver through an interrupt mechanism. The data of the Front-end Driver and the Back-end Device interact through the Virtqueue. In this embodiment, the VIRTIO back-end device is designed to include the apparatus for marking dirty page during live migration of virtual machine of the above embodiments to implement the method for marking dirty page during live migration of virtual machine.

Another embodiment of the present application provides a chip, including the apparatus for marking dirty page during live migration of virtual machine of any embodiment above.

Another embodiment of the present application provides an electronic device, including a processor, a memory, and a computer program stored on the memory and executable on the processor. The processor, when executing the program, performs the method for marking dirty page during live migration of virtual machine of any embodiment above.

The electronic device may further include a bus connecting different components (including the memory and the processor). The memory may include a computer-readable medium in the form of a volatile memory, such as a random-access memory (RAM) and/or a cache memory. The memory may also include at least one program product having a set (e.g., at least one) of program modules. These program modules are configured to perform the functions of the embodiments of the present application. The electronic device may also communicate with one or more external devices (such as a keyboard, a pointing device, a display, etc.), and may also communicate with one or more devices that enable a user to interact with the electronic device, and/or communicate with any devices (such as a network card) that enable the electronic device to communicate with one or more other computing devices. Such communication can be implemented via Input/Output (I/O) interfaces. Furthermore, the electronic device can also communicate with one or more networks (such as a Local Area Network (LAN), a Wide Area Network (WAN), and/or a public network, such as the Internet) via a network adapter.

Another embodiment of the present application provides a computer-readable storage medium. The computer-readable storage medium has a computer program stored thereon. The computer program, when is executed by a processor, performs the method for marking dirty page during live migration of virtual machine of any embodiment above.

Specifically, the computer-readable storage medium may include: any entity or recording medium capable of carrying computer program instructions, such as a USB flash drive, a removable hard disk, a magnetic disk, an optical disk, a computer memory, a Read-Only Memory (ROM), a Random Access Memory (RAM), an electrical carrier signal, a telecommunication signal, a software distribution medium, and the like.

The various embodiments of the present application have been described above. The above description is illustrative and not exhaustive, and is not limited to the disclosed embodiments. Various modifications and variations will be apparent to those of ordinary skill in the art without departing from the scope and spirit of the described embodiments. The terminology used herein was chosen to best explain the principles, practical applications or technical improvements of the embodiments in the market, or to enable others of ordinary skill in the art to understand the embodiments disclosed herein.

## Claims

1. An apparatus for marking dirty page during live migration of virtual machine, **characterized in that**, the apparatus comprises:
an input module, configured to receive a current direct memory access (DMA) write request sent by a target virtual function device, and output the current DMA write request to a dirty page recording module;
the dirty page recording module, configured to determine whether to generate a current dirty page write request or not according to the current DMA write request, and if yes, output the generated current dirty page write request to a dirty page merging module;
the dirty page merging module, configured to: when a previous dirty page write request of the target virtual function device has not stored, store the current dirty page write request; when the previous dirty page write request of the target virtual function device has already been stored, determine whether to merge the current dirty page write request and the previous dirty page write request or not according to respective write addresses thereof; if yes, store a merged dirty page write request; if no, output the previous dirty page write request to a subsequent module, and store the current dirty page write request.

2. The apparatus for marking dirty page during live migration of virtual machine according to claim 1, wherein the dirty page recording module comprises a dirty page marking logic unit, a mapping table, and a configuration table;
the mapping table is configured to store a live migration identifier of the target virtual function device, wherein the live migration identifier indicates whether a virtual machine where the target virtual function device is located is undergoing live migration;
the configuration table is configured to store a preset memory address range and a preset memory address of the virtual machine where the target virtual function device is located; and
the dirty page marking logic unit is configured to: determine whether the virtual machine where the target virtual function device is located is undergoing live migration or not according to the mapping table; and if yes, determine whether to generate a current dirty page write request or not according to the write address of the current DMA write request and the preset memory address range, and if yes, generate the current dirty page write request according to the preset memory address and the write address of the current DMA write request.

3. The apparatus for marking dirty page during live migration of virtual machine according to claim 2, wherein the mapping table comprises mapping units in one-to-one correspondence with a plurality of virtual function devices; and each mapping unit is configured to store a live migration identifier and index (*idx*) information of a corresponding virtual function device, wherein the live migration identifier indicates whether a virtual machine where the virtual function device is located is undergoing live migration;
the configuration table comprises a plurality of configuration units, and each configuration unit is configured to store a preset memory address range and a preset memory address of a corresponding virtual machine; and
the logic unit is configured to: obtain the live migration identifier and the index (*idx*) information of a corresponding target virtual function device according to the mapping table, and determine whether the virtual machine where the target virtual function device is located is undergoing live migration or not according to the live migration identifier; if yes, obtain a preset memory address range and a preset memory address stored in a configuration unit corresponding to the index (*idx*) information, and determine whether to generate a current dirty page write request or not according to the write address of the current DMA write request and the preset memory address range, and if yes, generate the current dirty page write request according to the preset memory address and the write address of the current DMA write request.

4. The apparatus for marking dirty page during live migration of virtual machine according to claim 3, wherein each configuration unit is further configured to store multiple segments of preset memory address ranges and one preset memory address of one virtual machine.

5. The apparatus for marking dirty page during live migration of virtual machine according to claim 3, wherein a number of the configuration units is less than a number of the mapping units.

6. The apparatus for marking dirty page during live migration of virtual machine according to claim 3, wherein the current dirty page write request comprises a device number of the target virtual function device, a write address, and a write length.

7. The apparatus for marking dirty page during live migration of virtual machine according to claim 6, wherein the dirty page merging module comprises a merging logic unit and a plurality of dirty page storage units;
each dirty page storage unit is configured to store a dirty page write request of one virtual function device;
the merging logic unit is configured to: when a dirty page storage unit corresponding to the target virtual function device has not stored a previous dirty page write request, store the current dirty page write request; when the dirty page storage unit corresponding to the target virtual function device has stored a previous dirty page write request, determine whether to merge the current dirty page write request and the previous dirty page write request or not according to respective write addresses thereof; if yes, store the merged dirty page write request; and if no, output the previous dirty page write request to a subsequent module, and store the current dirty page write request.

8. The apparatus for marking dirty page during live migration of virtual machine according to claim 7, wherein the merging logic unit is further configured to determine to merge the current dirty page write request and the previous dirty page write request when *add₁*/*m = add₂*/*m* is satisfied, or when *add₁*/*m = 1+add₂*/*m* is satisfied, or when *1+add₁*/*m = add₂*/*m* is satisfied;
wherein *add₁* represents the write address of the current dirty page write request, *add₂* represents the write address of the previous dirty page write request, and *m* represents a preset data width value.

9. The apparatus for marking dirty page during live migration of virtual machine according to claim 8, wherein the merging logic unit is further configured to:
when *add₁*/*m = add₂*/*m* is satisfied, set a write address of the merged dirty page write request to be a sum of the preset memory address and the write address of the previous dirty page write request, and a write length to be one unit;
when *add₁*/*m = 1+add₂*/*m* is satisfied, set a write address of the merged dirty page write request to be a sum of the preset memory address and the write address of the previous dirty page write request, and a write length to be two units; and
when *1+add₁*/*m = add₂*/*m* is satisfied, set a write address of the merged dirty page write request to be a sum of the preset memory address and the write address of the current dirty page write request, and a write length to be two units.

10. The apparatus for marking dirty page during live migration of virtual machine according to claim 7, wherein the dirty page storage unit is further configured to store a timestamp of the dirty page write request;
the merging logic unit is further configured to determine whether the dirty page write request has timed out according to the timestamp of the dirty page write request and a preset time threshold, and if yes, output a timed-out dirty page write request to the subsequent module.

11. The apparatus for marking dirty page during live migration of virtual machine according to claim 10, wherein the merging logic unit is further configured to determine whether a plurality of dirty page write requests have timed out according to a preset polling algorithm.

12. The apparatus for marking dirty page during live migration of virtual machine according to any one of claims 1 to 10, further comprising a DMA write request path;
the input module is further configured to output the current DMA write request to the DMA write request path; and
the DMA write request path is configured to output the current DMA write request to the subsequent module.

13. The apparatus for marking dirty page during live migration of virtual machine according to claim 12, wherein the apparatus further comprises a scheduling module;
the dirty page merging module is further configured to output the dirty page write request to the subsequent module through the scheduling module;
the DMA write request path is further configured to output the DMA write request to the subsequent module through the scheduling module; and
the scheduling module is configured to schedule the dirty page write request output by the dirty page merging module and the DMA write request output by the DMA write request path according to a preset scheduling algorithm, and output the dirty page write request or the DMA write request to the subsequent module according to a scheduling result.

14. A method for marking dirty page during live migration of virtual machine, **characterized in that** the method comprises:
receiving a current direct memory access (DMA) write request sent by a target virtual function device;
determining whether to generate a current dirty page write request or not according to the current DMA write request, and if yes, generating the current dirty page write request;
when a previous dirty page write request of the target virtual function device is not stored, storing the current dirty page write request; and
when a previous dirty page write request of the target virtual function device has already been stored, determining whether to merge the current dirty page write request and the previous dirty page write request or not according to respective write addresses thereof; if yes, storing a merged dirty page write request; if no, outputting the previous dirty page write request to a subsequent module, and storing the current dirty page write request.

15. The method for marking dirty page during live migration of virtual machine according to claim 14, wherein the method further comprises:
querying a mapping table, and determining whether a virtual machine where the target virtual function device is located is undergoing live migration or not according to a query result; and
if yes, querying a configuration table to obtain a preset memory address range and a preset memory address of the virtual machine, and determining whether to generate a current dirty page write request or not according to the write address of the current DMA write request and the preset memory address range, and if yes, generating the current dirty page write request according to the preset memory address and the write address of the current DMA write request;
wherein the mapping table stores a live migration identifier of the target virtual function device; the live migration identifier indicates whether the virtual machine where the target virtual function device is located is undergoing live migration; and the configuration table is configured to store the preset memory address range and the preset memory address of the virtual machine where the target virtual function device is located.

16. The method for marking dirty page during live migration of virtual machine according to claim 15, wherein the mapping table comprises mapping units in one-to-one correspondence with a plurality of virtual function devices, and each mapping unit stores a live migration identifier and index (*idx*) information of a corresponding virtual function device, wherein the live migration identifier indicates whether a virtual machine where the virtual function device is located is undergoing live migration;
the configuration table comprises a plurality of configuration units, and each configuration unit is configured to store a preset memory address range and a preset memory address of a corresponding virtual machine;
the method further comprises:
obtaining the live migration identifier and the index (*idx*) information of a corresponding target virtual function device according to the mapping table;
determining whether the virtual machine where the target virtual function device is located is undergoing live migration or not according to the live migration identifier;
if yes, obtaining a preset memory address range and a preset memory address stored in a configuration unit corresponding to the index (*idx*) information; and determining whether to generate a current dirty page write request or not according to the write address of the current DMA write request and the preset memory address range, and if yes, generating the current dirty page write request according to the preset memory address and the write address of the current DMA write request.

17. The method for marking dirty page during live migration of virtual machine according to claim 16, wherein each configuration unit is configured to store multiple segments of preset memory address ranges and one preset memory address of one virtual machine.

18. The method for marking dirty page during live migration of virtual machine according to claim 16, wherein a number of the configuration units is less than a number of the mapping units.

19. The method for marking dirty page during live migration of virtual machine according to claim 16, wherein the current dirty page write request comprises a device number of the target virtual function device, a write address, and a write length.

20. The method for marking dirty page during live migration of virtual machine according to claim 19, wherein the method further comprises:
when a dirty page storage unit corresponding to the target virtual function device has not stored a previous dirty page write request, storing the current dirty page write request; and
when the dirty page storage unit corresponding to the target virtual function device has stored a previous dirty page write request, determining whether to merge the current dirty page write request and the previous dirty page write request or not according to respective write addresses thereof; if yes, storing the merged dirty page write request; and if no, outputting the previous dirty page write request to a subsequent module, and storing the current dirty page write request.

21. The method for marking dirty page during live migration of virtual machine according to claim 20, wherein the method further comprises:
determining to merge the current dirty page write request and the previous dirty page write request when *add₁*/*m = add₂*/*m* is satisfied, or when *add₁*/*m = 1+add₂*/*m* is satisfied, or when *1+add₁*/*m = add₂*/*m* is satisfied;
wherein *add₁* represents the write address of the current dirty page write request, *add₂* represents the write address of the previous dirty page write request, and *m* represents a preset data width value.

22. The method for marking dirty page during live migration of virtual machine according to claim 21, wherein the method further comprises:
when *add₁*/*m = add₂*/*m* is satisfied, setting a write address of the merged dirty page write request to be a sum of the preset memory address and the write address of the previous dirty page write request, and a write length to be one unit;
when *add₁*/*m = 1+add₂*/*m* is satisfied, setting a write address of the merged dirty page write request to be a sum of the preset memory address and the write address of the previous dirty page write request, and a write length to be two units; and
when *1+add₁*/*m = add₂*/*m* is satisfied, setting a write address of the merged dirty page write request to be a sum of the preset memory address and the write address of the current dirty page write request, and a write length to be two units.

23. The method for marking dirty page during live migration of virtual machine according to claim 20, wherein the dirty page storage unit is further configured to store a timestamp of the dirty page write request; and
the method further comprises determining whether the dirty page write request has timed out according to the timestamp of the dirty page write request and a preset time threshold, and if yes, outputting a timed-out dirty page write request to the subsequent module.

24. The method for marking dirty page during live migration of virtual machine according to claim 23, wherein the method further comprises determining whether a plurality of dirty page write requests have timed out according to a preset polling algorithm.

25. The method for marking dirty page during live migration of virtual machine according to any one of claims 14 to 24, wherein the method further comprises:
scheduling the dirty page write request and the DMA write request according to a preset scheduling algorithm; and
outputting the dirty page write request or the DMA write request to the subsequent module according to a scheduling result.

26. A Virtual I/O (VIRTIO) back-end device, comprising the apparatus for marking dirty page during live migration of virtual machine according to any one of claims 1 to 13.

27. A chip, comprising the apparatus for marking dirty page during live migration of virtual machine according to any one of claims 1 to 13.

28. An electronic device, comprising a processor, a memory, and a computer program stored on the memory and executable on the processor, wherein the processor, when executing the computer program, performs the method for marking dirty page during live migration of virtual machine according to any one of claims 14 to 25.

29. A computer-readable storage medium, wherein the computer-readable storage medium has a computer program stored thereon, and the computer program, when executed by a processor, performs the method for marking dirty page during live migration of virtual machine according to any one of claims 14 to 25.
